# EUROPEAN PATENT SPECIFICATION

(11) **EP 1 929 447 B1**
(45) Date of publication and mention of the grant of the patent: **14.09.2011**
(21) Application number: 06776538.8
(22) Date of filing: 26.07.2006
(51) Int. Cl.: G07F 11/28

(54) **PRODUCT STORING AND DRAWING DEVICE, AND RELEVANT HANDLING PROCESS**
VORRICHTUNG ZUR LAGERUNG UND ENTNAHME VON PRODUKTEN SOWIE ENTSPRECHENDES BEHANDLUNGSVERFAHREN
DISPOSITIF DE STOCKAGE ET DE TRACTION ET PROCÉDÉ DE MANIPULATION CORRESPONDANT

(30) Priority: 19.09.2005 IT MI20051727
(43) Date of publication of application: 11.06.2008
(73) Proprietor: Mec @ Mat s.r.l., 20049 Concorezzo (MI) (IT)
(72) Inventor: SORMANI, Battista, I-20052 Monza (IT)
(74) Representative: Arena, Giovanni
(86) International application number: PCT/EP2006/007593
(87) International publication number: WO 2007/039005

(56) References cited:
- WO-A2-2004/014765
- DE-A1- 1 908 003
- DE-A1- 19 714 455
- US-A1- 2003 109 956
- US-A1- 2004 225 409

## Description

This invention refers to a device for the storing and drawing of products, and to a process for handling it. In particular, the following description will refer to a device for the storing of medicinal products of a type used in pharmacies.

### STATE OF THE ART

At present a tendency of pharmacies is to equip themselves with storing devices capable of automating the drawing and delivery processes of pharmaceutical products. These storing devices present a frame supporting sloping shelves fitted with partitions that define a multiple number of channels holding the products to be dispensed.

At the lower extremity of each channel, dispensing devices are provided, which are normally realised by means of electromagnetic actuators.

In another form of embodiment, at the lower end of the channels (which are shaped with partitions capable of assuming variable relative distances) a clamp is provided which is suitable for picking up and dispensing the products selected for dispensing.

In handling the traditional devices, the products carrying the same name are manually inserted at the highest extremity of a given channel, so that after individual draws these may slide by gravity towards the lowest portion, thus approaching the dispensing devices.

When the dispensing a particular product is commanded, the relative channel actuator is activated (or the clamp is activated) so as to cause it to be drawn.

However, the traditional devices of the mentioned latter type present a few drawbacks, and in particular the following:
- the drawing devices require periodical maintenance action,
- the drawing devices apply a drawing force non-related from case to case to the weight of the drugs drawn, and therefore ineffective for the heavier drugs,
- the limited degree of automation as regards the identification of the channels destined for the various drugs, and in particular of the drugs to be recharged.

Other devices for storing and drawing products are described by documents DE 1908003 A1 and US 2004/225409 A1.

DE 1908003 A1 describes a product storing and drawing device comprising a frame with one or more sloping shelves, each supporting a number of sloping channels. The channels are equipped, at their lower extremity, with mechanical retainers for preventing the descent of the stored products, as well as with devices, for expelling the same products, provided with expulsions pistons actuated by a pressurised medium.

US 2004/225409 A1 describes a handling process of a product storing and drawing device comprising:
- a frame supporting a number of shelves capable of containing the products to be drawn;
- a number of local control units, one for each shelf, each of which being capable of controlling the delivery of a certain number of products from the shelf, and of verifying that said delivery has properly occurred;
- a central data processing unit which, after having received instructions relating a product to be drawn, transmits said information to said local handling units.

### SCOPES OF THE INVENTION

One scope of this invention is to realize a storing device for products in general, and a process for handling it, capable of overcoming the technical drawbacks of the known state of the art.

In particular, the invention aims to realize at least one of the following advantages:
- use of drawing devices to draw products from their relative storage sites with a high reliability, and therefore essentially maintenance-free;
- use of drawing devices to draw products from their relative storage sites with a variable drawing force depending on the width of these sites:
- greater ease in the operation of charging these products to their storing sites;
- greater ease in the operation of removing the obsolete products;
- a better degree of automation in the handling process.

### SUMMARY OF THE INVENTION

These and other scopes of the present invention are attained by the technical solutions outlined in the enclosed claims.

### DRAWINGS

The characteristics of the invention will be more evident from the following description relating to examples of embodiment of a nonlimiting nature, making reference to the enclosed drawings, which show:
Fig.1: A schematic lateral view of a device according to this invention;
Fig. 2 A schematic prospective view of the device of Fig.1;

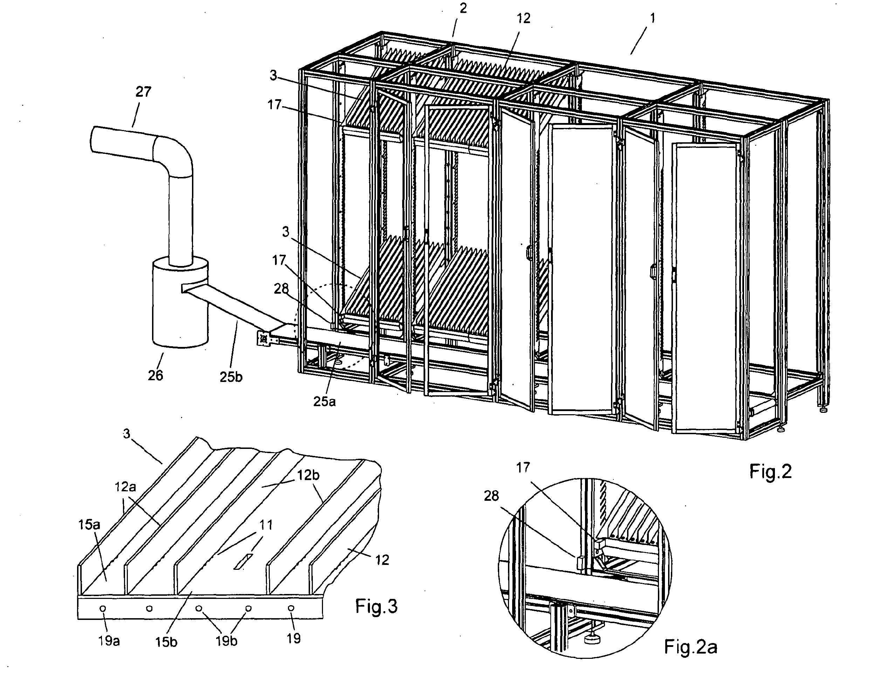

Fig.2a: An enlarged view of the portion of Fig. 2 surrounded by a dotted line;

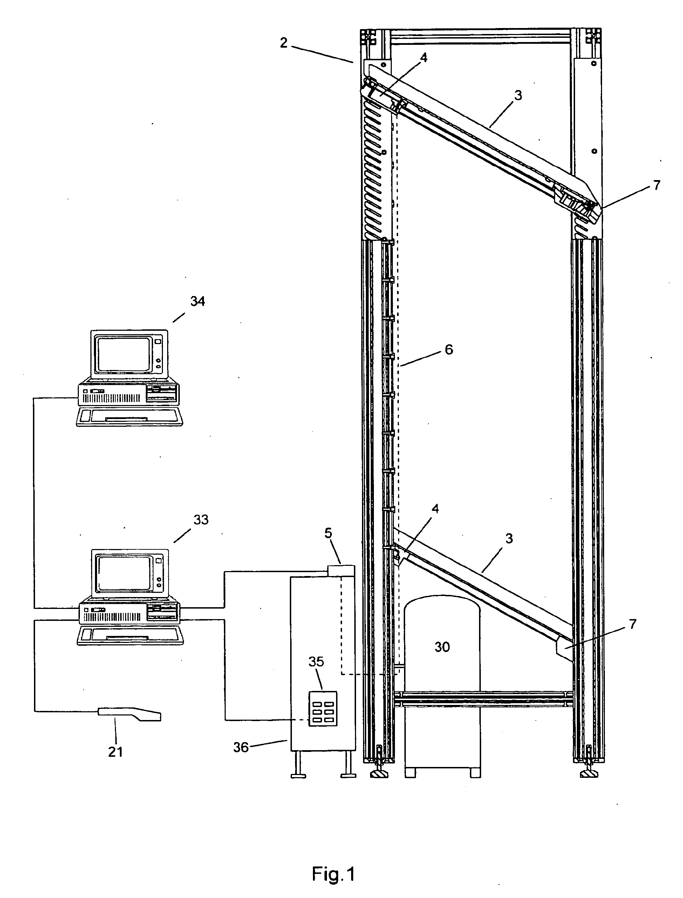

Fig.3: A schematic and enlarged partial prospective view of a shelf of Figs.1-2;

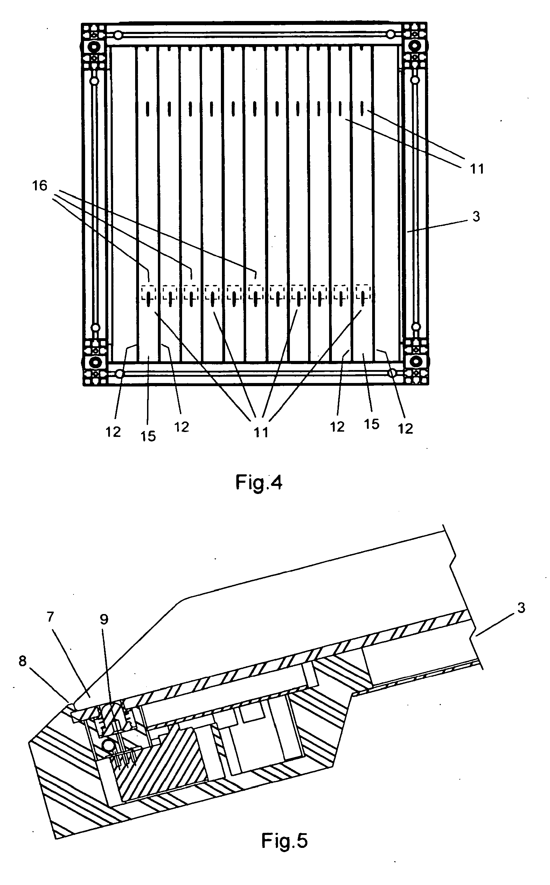

Fig. 4 A schematic and enlarged topside view of a shelf;
Fig. 5 A sectional view of a dispensing unit of the device according to this invention.

### PREFERRED EXAMPLES OF EMBODIMENT

With reference to the mentioned figures, a product storing device is shown under the reference number 1.

The device 1 comprises a supporting frame 2 with one or more shelves 3 capable of containing the products to be dispensed; the example represented in the enclosed figures shows only two shelves, but in practical applications the number of shelves is optimized in relation to the size of the frame 2 and the size of the products to be dispensed, and is generally higher than 2.

Each shelf 3 is provided with a local control unit 4 (equipped with a microprocessor) connected to a central control unit 33 (a data processor) through a converter 5 of the Rs232/Rs485 type with a serial-type bus 6 with a Pnet communications protocol or, as an alternative to the bus 6, by a radio communications system.

Each local control unit 4 is capable of governing the dispensing and recharging of the products from/to the respective shelf, on a command from the central unit 33.

In particular, the shelves 3 are set up in a sloping position and present, at their first bottom side rim, at least one product dispensing unit 7.

The dispensing unit 7 comprises a mechanical retainer 8 capable of stopping the products to be dispensed at the first rim of the shelves 3, and one or more floating expulsion pistons 9 pneumatically actuated designed to cause the overcoming of the mechanical retainer 8 by a product, to allow its dispensing (Fig. 5).

Moreover, each of the shelves 3 is equipped with one or more sockets 11 capable of receiving lateral guides 12 designed to define two or more holding channels 15 for the products to be dispensed (Figure 4).

Appropriately, the device 1 comprises sensors 16. These sensors (for instance constituted of fork-like barrier sensors) are capable of identifying the presence and position of the lateral guides 12 of each shelf 3, and to communicate said presence and position to the local unit 4 of the same shelf 3, where the latter is capable of communicating the position of the lateral guides 12 to the central unit 33.

In a preferred form of embodiment, a couple of pistons 9 is arranged between two successive sockets of every couple of successive sockets 11.

The device also comprises a sensor 17 placed at the lower rim of each shelf 3 and capable of detecting the completed expulsion of the pre-established number of products (the sensor is in practice a barrier-type photocell, which can detect the passage of the requested number of products).

This sensor 17 communicates the completed delivery to the local unit 4 of the shelf 3, and than the local unit 4 communicate said completed delivery to the central unit 33.

The local unit 4 controls the simultaneous actuation of the pistons of a dispensing unit 7 of a channel, to cause the expulsion of a product contained in that channel.

Each of the shelves 3 is equipped with one or more signalling devices 19 capable of unequivocally indicating each of the channels 15 defined on each shelf 3.by the lateral guides 12.

Fig. 3 in particular shows a multiple number of luminous LEDs 19, each placed between two successive sockets 11 so that, when two lateral successive guides 12a are inserted, the luminous LED 19a placed between them unequivocally indicates the channel 15a defined by the same, whereas, when one or more lateral guides are not inserted and a conduit 15b is delimited by two lateral not successive guides 12b, the same conduit 15b is unequivocally localisable by the intermediate luminous LEDs 19b, which are lit up by the local unit 4 of that particular shelf.

The central unit 33 is advantageously equipped with a peripheral unit 21 designed to read the characteristics of each product to be inserted into the storing device 1; moreover the central unit 33 (inquiring a database in which there are recorded the identifying data of the product stored in every channel) is capable of tracing, for each product to be inserted in the storing device, the channels 15 already containing the same products and to command (by means of the local unit 4 of the relevant shelf) the signallers 19 to automatically point out the particular channel 15 where the insertion product is to be inserted.

The peripheral insertion unit 21 is preferably a bar code reading unit connected to the central unit.

As shown in Figure 2, the device also comprises a conveyor belt 25a, 25b capable of drawing the product dispensed by the dispensing group 7 and to carry it to a pneumatic shipping station 26 connected to the transport channels 27; the shipping station 26 is capable of shipping the products all the way to the delivery point.

Moreover, the device comprises a sensor 28 placed at a terminal portion of the conveyor belt, which can detect the transit of the requested number of products and is connected to the controlling and processing unit (Programmable Logic Controller) 35, (inserted, together with other electromechanical feeding and control units of the storing device, in a housing 36), which is also connected to the central unit 33, so as to transmit this information to the same.

In this preferred form of embodiment of the device according to this invention, the dispensing groups 7 are pneumatically controlled, the device 1 thus contains a compressor 30 to feed the dispensing groups 7 of the shelves 3; moreover, the frame 2 advantageously comprises tubular steel profiles (as pillars) connected to the compressor and defining compressed air tanks (not shown in the figures); this allows limiting the dimensions of the compressor and of its switching cycles, while maintaining an excellent operating range.

The operation of the device according to the invention can be described as follows.

An operator send a request for a particular product by means of a user PC 34 (connected to the central unit 33) constituted for example of a PC placed on a pharmacy counter and directly accessible by a pharmacist.

When the pharmacist receives a medical prescription prescribing a predefined number of drugs, he generates a string of requests (defining both the type of the products and their unequivocal bar codes) on the user PC 34, which is then transmitted to the central unit 33.

The central unit 33 transmits a signal through the bus 6, which is indicative of the products and of the quantity of each product to be dispensed; these signals are captured by all the local units 4 and processed so that only the unit of interest commands the dispensing unit 7 to cause the delivery of the requested number of products.

In case a requested product is contained in only one channel 15, the products dispensed are those that have been inserted into the channel as first (because of the particular structure of the channel itself), and therefore exhibit the nearest expiration date (1st in / 1 st out rule).

In case the requested products are contained in more than one channel 15, the central unit 33 commands them to be dispensed first from the channels that have been filled first, and subsequently from the others, so as to always guarantee the delivery of the product with the nearest expiration date.

When the device 1 must be re-supplied with products (which are typically provided with bar codes defining their characteristics), the central unit 33 is supplied with the necessary characteristics of the products to be inserted (by reading the bar codes with the bar code reader 21).

On the bus 6 the central unit 33 sends out a string of commands, containing the name of the local unit 4 and of the channel 15 interested for the insertion of the product; this string is picked up by all the local units 4, and only the local unit 4 to which the order is addressed, commands the luminous LED(s) corresponding to said channel 5 to light up; the operator can thus, in a simple and rapid manner, insert the corresponding product into the channel signalled by the luminous LED(s). The products inserted in this manner advantageously have an expiration date, which is more remote than that of the products already stored.

In case the central unit 33 fails to identify the channel(s) 15 suitable for containing the product to be inserted, it becomes necessary to run an inserting process for creating a new channel or for modifying the existing channels in order to create the space needed by the new channel 15 for containing the new product.

In the first case it suffices to add one or more lateral guides 12 to delimit the new channel 15; the sensors 16 will detect this modification and communicate it to the local unit 4, which will in turn transmit it to the central unit 33.

In the second case (modification of the channels) one or more of the lateral guides 12 are shifted or eliminated, so as to-generate channels 15 of suitable dimensions; the sensors 16 are capable of detecting these modifications an to communicate them to the local unit 4 which will in turn transmit it, if interrogated, to the central unit 33 itself.

In case the creation of a new channel is impossible even by modifying the existing channels, a new shelf has to be added.

After materially adding a shelf 3 (carrying a standard coded name) to the frame 2, its name (defined by the user) is inserted by the computer PC 33 in its local unit 4 (so that said unit may communicate with the central unit 33 in the same way of the other local units 4). Then the lateral guides 12 are inserted in order to generate the channels 15 with the desired dimensions, even in this case, the insertion of lateral guides 12 is detected by sensors 16 that communicate the insertion positions to the local unit 4 of the shelf, and the same transmits it, when interrogated, to the central unit 33.

It is evident that the examples of embodiment previously described for illustrating and non limiting purposes may entail numerous modifications, adaptations, variations and substitutions of elements with others of an obviously equivalent function, without thereby abandoning the scope of the following claims.

Thus, for example, all connections for exchanging data between the local unit and the central units may be realized through a blue-tooth linkage, so as to limit the number of cables of the machine (the compressed air distribution channels will in any case have to be provided).

Moreover the storing and drawing device according to present invention can be utilised for handling not only medicinal products but even other products in general.

The handling process according to the invention consists in communicating the data, relating to the product to be dispensed, from the pharmacy' handling unit to the central unit; the central unit transmits these data to a multiple number of local units, each of which is capable of governing the delivery from one shelf, and of verifying that said delivery has properly occurred.

The process even consists in communicating the data relating to the product to be inserted to the central unit; then the central unit identifies the channels wherein similar products are present and identifies (among them and based on a pre-established priority) the channel in which the products must be inserted, and controls that the same channel be indicated by the signalling device.

In a preferred form of embodiment, the new products are inserted in empty channels and the priority is based on the expiration data of the products themselves.

## Claims

1. Product storing and drawing device comprising a frame (2) with one or more sloping shelves (3), each of which supports a number of sloping channels (15) equipped, at their lower extremity, with mechanical retainers (8) for preventing the descent of the products stored there, as well as with devices (9) for expelling the same products provided with expulsion pistons actuated by a pressurised medium, **characterised by** the fact that:
- the expulsion pistons are pneumatically actuated;
- the expelling devices (9) are fed by a compressor (30);
- the frame (2) comprises tubular profiles connected to said compressor and defining compressed air tanks.

2. Product storing devices according to claim 1, **characterized by** the fact that said channels (15) of each shelf present lateral guides (12) susceptible of assuming relative distances of various value, being insertable in sockets (11) set at various distances from the sides of the shelf.

3. Product storing devices according to claim 2, **characterized by** the fact that the distribution of the expelling devices (9) is such that in each channel realisable by means of two lateral guides (12) inserted into two immediately adjacent sockets (11), two of the said expelling devices (9) are present.

4. Device according to any of the preceding claims, **characterized by** the presence of a central data processing unit (33), capable of controlling the actuation of the expulsion pistons of any one of said channels (15) to cause the expulsion of a product contained in that channel.

5. Device according to claim 4, **characterized by** the fact that it comprises sensors (16) capable of identifying the position of said lateral guides (12) of each shelf (3) and of communicating it to said central data processing unit (33).

6. Device according to claim 4, **characterized by** the fact that it comprises a sensor (17) placed at the lower rim of each shelf (3) and capable of detecting the completed expulsion of a pre-established quantity of said products, and of communicating the completed expulsion to said central data processing unit (33).

7. Device according to claim 5, **characterized by** the fact that each of said shelves is equipped with one or more signalling devices (19) capable of unequivocally indicating, upon a command of said central data processing unit (33), any one of the channels (15) defined on each shelf (3) by the lateral guides (12).

8. Device according to claim 7, **characterized by** the fact that said central data processing unit (33) is equipped with a peripheral unit (21) for reading the individualizing data of each product to be stored, where said central data processing unit is capable of tracing, for each product to be stored and inquiring a database in which there are recorded the identifying data of the product stored in every channel (15), the channels (15) already containing the same products and of controlling the signalling devices (19) to indicate the channel in which the product must be inserted.

9. Device according to claim 8, **characterized by** the fact that said peripheral reading unit (21) is a twelve-bar reader.

10. Device according to claim 4, **characterized by** the fact that it comprises a user computer (34) connected to the central processing unit (33), capable of generating a request string defining the type and/or the number of the products to be drawn and of transmitting it to said central processing unit.

11. Device according to claim 10 **characterized by** the fact that every shelf is provided with a local control unit (4), equipped with a microprocessor and functioning as interface with said central processing unit (33), which is capable of controlling the drawing of products from the respective shelf after having received a string defining the type and the number of the products to be drawn by the central processing unit.

12. Device according to one or more of the preceding claims, **characterized by** the fact that it comprises a belt conveyor (25a, 25b) capable of picking up the product dispensed by said expelling devices (9), and of carrying it to a pneumatic shipping unit (26) connected to pneumatic transport channels (27), where said shipping unit is capable of shipping the product to a point of delivery.

13. Device according to claim 12, **characterized by** the fact that it comprises a sensor (28) placed at the end portion of said conveyor belt (25a, 25b), where said sensor is capable of detecting the passage of a requested number of products and is connected to said central processing unit (33) to transmit it said information.

14. Handling process of a product storing and drawing device according to claim 1 comprising a frame supporting a number of shelves capable of containing the products to be drawn, **characterised by** the presence of:
- a number of local control units (4), one for each shelf, each of which is capable of controlling the delivery of a certain number of products from the shelf, and of verifying that said delivery has properly occurred,
- a central data processing unit (33), which, after having received instructions relating to a product to be drawn, transmits said information to said local handling units.

15. Handling process according to the preceding claim, **characterized by** the fact that it provides a communication of data relating to the product to be charged to a central data processing unit (33), where said central unit identifies the channels wherein the products similar to the products to be inserted are stored and identifies, according to a pre-established priority, the channel in which the products must be inserted and controls the signalling of the channel in which the products must be inserted by using a signalling device.

16. Handling process according to the preceding claim, **characterized by** the fact that said central data processing unit (33) controls the storing of the new products in free channels, and by the fact that the pre-established priority is based on the expiration date of the products themselves.

## Patentansprüche

1. Vorrichtung zum Lagern und Ziehen von Produkten, umfassend einen Rahmen (2) mit einem oder mehreren geneigten Regalen (3), die jeweils eine Anzahl von geneigten Kanälen (15) tragen, die an ihrem unteren Ende mit mechanischen Halterungen (8) zum Verhindern des Abfalls der dort gelagerten Produkte sowie mit Vorrichtungen (9) zum Ausstoßen derselben Produkte ausgestattet sind, die mit Ausstoßkolben versehen sind, die durch ein Druckmedium betätigt werden, **dadurch gekennzeichnet, dass**:
- die Ausstoßkolben pneumatisch betätigt werden;
- die Ausstoßvorrichtungen (9) durch einen Kom- pressor (30) gespeist werden;
- der Rahmen (2) rohrförmige Profile umfasst, die mit dem Kompressor verbunden sind und Druck- luftbehälter definieren.

2. Vorrichtungen zum Lagern von Produkten nach Anspruch 1, **dadurch gekennzeichnet, dass** die Kanäle (15) jedes Regals seitliche Führungen (12) aufweisen, die dafür empfänglich sind, relative Abstände unterschiedlichen Wertes anzunehmen, und in Aufnahmen (11) eingesetzt werden können, die in verschiedenen Abständen von den Seiten des Regals festgelegt sind.

3. Vorrichtungen zum Lagern von Produkten nach Anspruch 2, **dadurch gekennzeichnet, dass** die Verteilung der Ausstoßvorrichtungen (9) derart ist, dass in jedem Kanal, der durch zwei seitliche Führungen (12) realisierbar ist, die in zwei unmittelbar benachbarte Aufnahmen (11) eingesetzt werden, zwei der Ausstoßvorrichtungen (9) vorhanden sind.

4. Vorrichtung nach einem der vorhergehenden Ansprüche, **gekennzeichnet durch** das Vorhandensein einer zentralen Datenverarbeitungseinheit (3), die in der Lage ist, die Betätigung der Ausstoßkolben eines beliebigen der Kanäle (15) zu steuern, um den Ausstoß eines Produkts zu bewirken, das in dem Kanal enthalten ist.

5. Vorrichtung nach Anspruch 4, **dadurch gekennzeichnet, dass** sie Sensoren (16) umfasst, die in der Lage sind, die Position der seitlichen Führungen (12) jedes Regals (3) zu identifizieren und sie der zentralen Datenverarbeitungseinheit (33) zu kommunizieren.

6. Vorrichtung nach Anspruch 4, **dadurch gekennzeichnet, dass** sie einen Sensor (17) umfasst, der am unteren Rand jedes Regals (3) angeordnet und in der Lage ist, den vollendeten Ausstoß einer im Voraus festgelegten Menge der Produkte zu erkennen und den vollendeten Ausstoß der zentralen Datenverarbeitungseinheit (33) zu kommunizieren.

7. Vorrichtung nach Anspruch 5, **dadurch gekennzeichnet, dass** jedes der Regale mit einer oder mehreren Signalisierungsvorrichtungen (19) ausgestattet ist, die in der Lage sind, einen beliebigen der Kanäle (15), die auf jedem Regal (3) durch die seitlichen Führungen (12) definiert sind, auf Befehl der zentralen Datenverarbeitungseinheit (33) eindeutig anzuzeigen.

8. Vorrichtung nach Anspruch 7, **dadurch gekennzeichnet, dass** die zentrale Datenverarbeitungseinheit (33) mit einer peripheren Einheit (21) zum Lesen der Individualisierungsdaten jedes zu lagernden Produkts ausgestattet ist, wobei die zentrale Datenverarbeitungseinheit zum Zurückverfolgen für jedes zu lagernde Produkt und Abfragen einer Datenbank, in welcher die Identifizierungsdaten des in jedem Kanal (15) gelagerten Produkts aufgezeichnet sind, wobei die Kanäle (15) bereits dieselben Produkte enthalten, und zum Steuern der Signalisierungsvorrichtungen (19) in der Lage ist, um den Kanal anzuzeigen, in welchen das Produkt eingeführt werden muss.

9. Vorrichtung nach Anspruch 8, **dadurch gekennzeichnet, dass** die periphere Leseeinheit (21) ein Zwölf--Strich-Lesegerät ist.

10. Vorrichtung nach Anspruch 4, **dadurch gekennzeichnet, dass** sie einen Bedienercomputer (34) umfasst, der mit der zentralen Verarbeitungseinheit (33) verbunden und in der Lage ist, einen Anforderungsstring zu erzeugen, der den Typ und/oder die Anzahl der zu ziehenden Produkte definiert, und ihn an die zentrale Verarbeitungseinheit zu senden.

11. Vorrichtung nach Anspruch 10, **dadurch gekennzeichnet, dass** jedes Regal mit einer lokalen Steuereinheit (4) versehen ist, die mit einem Mikroprozessor ausgestattet ist, als Schnittstelle mit der zentrale Verarbeitungseinheit (33) fungiert und in der Lage ist, das Ziehen von Produkten aus dem jeweiligen Regal zu steuern, nachdem ein String durch die zentrale Verarbeitungseinheit empfangen wurde, der den Typ und die Anzahl der zu ziehenden Produkte definiert.

12. Vorrichtung nach einem oder mehreren der vorhergehenden Ansprüche, **dadurch gekennzeichnet, dass** sie einen Bandförderer (25a, 25b) umfasst, der in der Lage ist, das Produkt aufzunehmen, das durch die Ausstoßvorrichtungen (9) ausgegeben wird, und es zu einer pneumatischen Versandeinheit (26) zu überführen, die mit pneumatischen Transportkanälen (27) verbunden ist, wobei die Versandeinheit in der Lage ist, das Produkt an eine Lieferstelle zu versenden.

13. Vorrichtung nach Anspruch 12, **dadurch gekennzeichnet, dass** sie einen Sensor (28) umfasst, der am Endabschnitt des Bandförderers (25a, 25b) angeordnet ist, wobei der Sensor in der Lage ist, den Durchgang einer angeforderten Anzahl von Produkten zu erkennen, und mit der zentralen Verarbeitungseinheit (33) verbunden ist, um ihr die Informationen zu senden.

14. Verfahren zur Handhabung einer Vorrichtung zum Lagern und Ziehen von Produkten nach Anspruch 1, die einen Rahmen umfasst, der eine Anzahl von Regalen trägt, die zum Aufnehmen der zu ziehenden Produkte in der Lage sind, **gekennzeichnet durch** das Vorhandensein von:
- einer Anzahl von lokalen Steuereinheiten (4), einer für jedes Regal, die jeweils in der Lage sind, die Lieferung einer bestimmten Anzahl von Produkten aus dem Regal zu steuern und zu verifizieren, dass die Lieferung ordnungsgemäß erfolgt ist,
- einer zentralen Datenverarbeitungseinheit (33), welche nach Empfang von Anweisungen in Bezug auf ein zu ziehendes Produkt die Informationen an die lokalen Handhabungseinheiten sendet.

15. Handhabungsverfahren nach dem vorhergehenden Anspruch, **dadurch gekennzeichnet, dass** es eine Übertragung von Daten in Bezug auf das zu ladende Produkt an eine zentrale Datenverarbeitungseinheit (33) vorsieht, wobei die zentrale Einheit die Kanäle identifiziert, wobei die Produkte gelagert sind, die den einzuführenden Produkte ähnlich sind, und gemäß einer im Voraus festgelegten Priorität den Kanal identifiziert, in welchen die Produkte eingeführt werden müssen, und die Signalisierung des Kanals, in welchen die Produkte eingeführt werden müssen, durch Verwenden einer Signalisierungsvorrichtung steuert.

16. Handhabungsverfahren nach dem vorhergehenden Anspruch, **dadurch gekennzeichnet, dass** die zentrale Datenverarbeitungseinheit (33) das Lagern der neuen Produkte in freien Kanälen steuert, und **dadurch**, dass die im Voraus festgelegte Priorität auf dem Ablaufdatum der Produkte selbst basiert.

## Revendications

1. Dispositif de stockage et d'extraction de produits comprenant un cadre (2) et une ou plusieurs étagères inclinées (3), dont chacune supporte une pluralité de canaux inclinés (15) équipés, au niveau de leur extrémité inférieure, de systèmes de retenue mécanique (8) pour empêcher la chute de produits stockés dans ces canaux, ainsi que de dispositifs (9) d'extraction desdits produits étant équipés de pistons d'extraction actionnés par un moyen sous pression, **caractérisé par le fait que** :
- les pistons d'extraction sont actionnés de façon pneumatique ;
- les dispositifs d'extraction (9) sont alimentés par un compresseur (30) ;
- le cadre (2) comprend des profils tubulaires reliés audit compresseur et définissant des réservoirs d'air comprimé.

2. Dispositif de stockage de produits selon la revendication 1, **caractérisé par le fait que** lesdits canaux (15) de chaque étagère comprennent des guides latéraux (12) aptes à adopter différentes longueurs et étant insérables dans des cavités (11) aménagées à des distances diverses des côtés de l'étagère.

3. Dispositif de stockage de produits selon la revendication 2, **caractérisé par le fait que** la distribution des dispositifs d'extraction (9) est telle que deux dispositifs d'extraction sont agencés dans chaque canal délimité au moyen de deux guides latéraux (12) insérés dans deux cavités immédiatement adjacentes (11).

4. Dispositif selon l'une quelconque des revendications précédentes, **caractérisé par** la présence d'une unité centrale (33) de traitement de données, apte à commander l'actionnement des pistons d'extraction de l'un quelconque desdits canaux (15) pour provoquer l'extraction d'un produit contenu dans ce canal.

5. Dispositif selon la revendication 4, **caractérisé par le fait qu'**il comprend des capteurs (16) aptes à identifier la position desdits guides latéraux (12) de chaque étagère (3) et à la communiquer à ladite unité centrale (33) de traitement de données.

6. Dispositif selon la revendication 4, **caractérisé par le fait qu'**il comprend un capteur (17) placé au niveau du bord inférieur de chaque étagère (3) et étant apte à détecter que l'extraction d'une quantité préétablie desdits produits est terminée, et à communiquer l'information selon laquelle cette extraction est terminée à ladite l'unité centrale (33) de traitement de données.

7. Dispositif selon la revendication 5, **caractérisé par le fait que** chacune desdites étagères est équipée d'un ou plusieurs dispositifs de signalisation (19) apte(s) à indiquer sans équivoque, en réponse à une commande de ladite unité centrale (33) de traitement de données (33), l'un quelconque des canaux (15) définis sur chaque étagère (3) par les guides latéraux (12).

8. Dispositif selon la revendication 7, **caractérisé par le fait que** ladite unité centrale (33) de traitement de données est équipée d'une unité périphérique (21) pour lire les données d'individualisation de chaque produit destiné à être stocké, ladite unité centrale de traitement de données étant apte à interroger une base de données dans laquelle sont enregistrées les données d'identification du produit stocké dans chaque canal (15), à localiser, pour chaque produit destiné à être stocké, les canaux (15) contenant au préalable les mêmes produits, et à commander les dispositifs de signalisation (19) pour indiquer le canal dans lequel le produit doit être inséré.

9. Dispositif selon la revendication 8, **caractérisé par le fait que** ladite unité périphérique de lecture (21) est un lecteur de codes à douze barres.

10. Dispositif selon la revendication 4, **caractérisé par le fait qu'**il comprend un ordinateur individuel (34) relié à l'unité centrale de traitement (33), apte à générer une chaîne de requête définissant le type et/ou le nombre de produits destinés à être extraits et à la transmettre à ladite unité centrale de traitement.

11. Dispositif selon la revendication 10, **caractérisé par le fait que** toute étagère est munie d'une unité de commande locale (4), équipée d'un microprocesseur et fonctionnant comme une interface avec ladite unité centrale de traitement (33), étant apte à commander l'extraction de produits d'une étagère respective après avoir reçu une chaîne définissant le type et le nombre de produits destinés à être extraits, par l'unité centrale de traitement.

12. Dispositif selon l'une quelconque ou plusieurs des revendication(s) précédente(s), **caractérisé par le fait qu'**il comprend un convoyeur à bande (25a, 25b) apte à attraper le produit distribué par lesdits dispositifs d'extraction (9), et à le transporter vers une unité pneumatique d'expédition (26) reliée à des canaux de transport pneumatiques (27), ladite unité d'expédition étant apte à expédier le produit vers un point de livraison.

13. Dispositif selon la revendication 12, **caractérisé par le fait qu'**il comprend un capteur (28) placé au niveau de la partie d'extrémité dudit convoyeur à bande (25a, 25b), ledit capteur étant apte à détecter le passage d'un nombre de produits requis et étant relié à ladite unité centrale de traitement (33) pour lui transmettre cette information.

14. Procédé de manipulation d'un dispositif de stockage et d'extraction de produits selon la revendication 1, comprenant un cadre supportant une pluralité d'étagères aptes à contenir les produits destinés à être extraits, **caractérisé par** la présence :
- d'une pluralité d'unités de commande locales (4), une pour chaque étagère, dont chacune est apte à commander la livraison d'une pluralité de produits à partir de l'étagère, et à vérifier que ladite livraison s'est a été réalisée correctement,
- d'une unité centrale (33) de traitement de données, qui, après avoir reçu des instructions relatives à un produit destiné à être extrait, transmet cette information auxdites unités de commande locales.

15. Procédé de manipulation selon la revendication précédente, **caractérisé par le fait qu'**il fournit une communication de données relative au produit à charger à une unité centrale (33) de traitement de données, ladite unité centrale identifiant les canaux dans lesquels les produits similaires aux produits destinés à être insérés sont stockés et identifie, selon une priorité préétablie, le canal dans lequel les produits doivent être insérés et commande la signalisation du canal dans lequel les produits doivent être insérés en utilisant un dispositif de signalisation.

16. Procédé de manipulation selon la revendication précédente, **caractérisé par le fait que** ladite unité centrale (33) de traitement de données commande le stockage des nouveaux produits dans des canaux libres, et **par le fait que** la priorité préétablie est basée sur la date d'expiration des produits.
